# EUROPÄISCHE PATENTSCHRIFT

(11) **EP 0 601 489 B1**
(45) Veröffentlichungstag und Bekanntmachung des Hinweises auf die Patenterteilung: **09.04.1997**
(21) Anmeldenummer: 93119479.9
(22) Anmeldetag: 03.12.1993
(51) Int. Cl.: B60R 21/26

(54) **Flüssiggasgenerator für Airbag**
Liquified gas generator for airbag
Générateur à gaz liquide pour airbag

(30) Priorität: 08.12.1992 DE 4241221
(43) Veröffentlichungstag der Anmeldung: 15.06.1994
(73) Patentinhaber: Dynamit Nobel GmbH Explosivstoff- und Systemtechnik, 53840 Troisdorf (DE)
(72) Erfinder: Brede, Uwe, D-90765 Fürth (DE); Hörr, Alfred, D-90513 Zirndorf (DE); Kraft, Josef, D-92348 Berg (DE); Riess, Heinz, D-90765 Fürth (DE)
(74) Vertreter: Schulz, Wilfried, Dipl.-Ing.

(56) Entgegenhaltungen:
- EP-A- 0 539 872
- WO-A-91/11347
- WO-A-91/15381
- DE-A- 4 242 793

## Beschreibung

Die Erfindung betrifft einen Flüssiggasgenerator für ein aufblasbares Aufprallschutzkissen zum Schutz eines Kraftfahrzeug-Insassen vor Verletzungen.

Bei passiven Sicherheitseinrichtungen für Kraftfahrzeuge, bei denen Fahrer und Beifahrer durch aufblasbare Aufprallschutzkissen vor Verletzungen durch Aufprall auf das Lenkrad oder Armaturenbrett geschützt werden (auch Airbag genannt), werden zur Gaserzeugung zumeist Gasgeneratoren mit festem Treibladungssatz verwendet. Hierbei handelt es sich beispielsweise um ein Material auf Natriumazid-Basis. Ein gewisser Nachteil derartiger Gasgeneratoren besteht darin, daß die bei der Verbrennung entstehenden Schlackepartikel durch mehr oder weniger aufwendige Filterpakete zurückgehalten werden müssen, um nicht zusammen mit den Verbrennungsgasen auf die Innenseite des Aufprallschutzkissens aufzutreffen, wodurch dieses beschädigt werden könnte. Zum Teil sind die Aufprallschutzkissen zum Zwecke eines zusätzlichen Schutzes vor Beschädigungen durch Partikel innenbeschichtet. Dadurch ist das Material für das Aufprallschutzkissen biegesteifer und läßt sich weniger gut und weniger komprimiert in dem Modul bzw. -Behältnis unterbringen.

In jüngster Zeit sind Anstrengungen unternommen worden, passive Sicherheitseinrichtungen für Kraftfahrzeuge der obigen Art mit Flüssiggasgeneratoren auszustatten. Bei der Verbrennung des Flüssiggases entstehen keine festen Partikel, so daß auf Filterpakete verzichtet werden kann. Demzufolge kann auch auf eine Innenbeschichtung des Aufprallschutzkissens verzichtet werden. Beides zusammen führt zu Gewichts- und Platzbedarfsreduzierungen. Die EP-A-539 872, die den nächstliegenden Stand der Technik nach Art. 54(3) und (4) darstellt, offenbart einen solchen Flüssiggasgenerator.

Damit Gasgeneratoren ihre Verbrennungsgase erst ab einem bestimmten Innendruck und damit reproduzierbar und kontrolliert abgeben, ist es bekannt, membranähnliche Elemente vorzusehen, die ab einer bestimmten Druckbeaufschlagung aufbrechen. Über derartige Membranen lassen sich auch die Gaserzeugungsraten und die Zeitverzögerung, mit der das Aufprallschutzkissen nach Auslösung des Crash-Sensors aufgeblasen wird, einstellen. Aus Gründen der Sicherheit ist es vorteilhaft, wenn dieses membranähnliche Teil des Gasgenerators erst druckbeaufschlagt wird, wenn der Gasgenerator gezündet ist, bei nicht gezündetem Gasgenerator also drucklos ist.

Der Erfindung liegt die Aufgabe zugrunde, einen Flüssiggasgenerator der eingangs genannten Art zu schaffen, bei dem über die gesamte Betriebsdauer die Gaserzeugung gesteuert und reproduzierbar erfolgen kann.

Zur Lösung dieser Aufgabe wird mit der Erfindung ein Flüssiggasgenerator vorgeschlagen, dessen Gehäuse einen geschlossenen Reaktionsbehälter zur Aufnahme von Flüssiggas aufnimmt. In dem Gehäuse ist ein Hohlraum ausgebildet, der bei eingeführtem Reaktionsbehälter an diesen angrenzt. In dem Hohlraum ist verschiebbar ein Durchschlagelement angeordnet, das bei Zündung eines Anzündelements durch die Wand des Reaktionsbehälters hindurch getrieben wird. Das Durchschlagelement ist mit einem Überströmkanal ausgestattet. Nach Durchstechen der Wand des Reaktionsbehälters durch das Durchschlagelement besteht also über den Überströmkanal eine Verbindung zwischen dem Innern des Reaktionsbehälters und dem Hohlraum. In den Hohlraum mündet ein Abströmraum, der ebenfalls im Gehäuse ausgebildet ist. Die Verbindung zwischen Abströmraum und Hohlraum ist durch eine Berstmembran verschlossen. Die Berstmembran bricht bei Erreichen eines bestimmten Drucks im Hohlraum auf.

Zur Auslösung des erfindungsgemäßen Flüssiggasgenerators wird dessen Anzündelement gezündet. Die Verbrennungsgase, die bei der Zündung des Anzündelements entstehen, gelangen in den Hohlraum und treiben das Durchschlagelement durch die wand des Reaktionsbehalters. Über den Überströmkanal gelangen alsdann die heißen Verbrennungsgase des Anzündelements in den Reaktionsbehälter hinein, wo die Verbrennung des Flüssiggases initiiert wird. Als Folge der Perforation der Behälterwand treten die Verbrennungsgase aus dem Reaktionsbehälter über den Überströmkanal des in der Wand des Reaktionsbehälters sitzenden Durchschlagelements in den Hohlraum hinein. Sobald die Verbrennungsgase im Hohlraum einen bestimmten Druck erreicht haben, bricht die Berstmembran auf und gibt die Verbindung zum Abströmkanal frei. Die in den Abströmkanal eintretenden Verbrennungsgase gelangen über Öffnungen im Gehäuse aus dem Gasgenerator heraus, wo sie das gefaltete Aufprallschutzkissen aufblasen.

Bei dem erfindungsgemäßen Flüssiggasgenerator ist die Berstmembran bei nicht initiiertem Gasgenerator frei von Druckbelastungen. Denn solange der Reaktionsbehälter geschlossen ist, treten keine erhöhten Drücke im Hohlraum auf. Die Berstmembran hält dem bei der Zündung des Anzündelements entstehenden Gasdruck des Hohlraums stand und bricht erst dann auf, wenn Verbrennungsgase aus dem Reaktionsbehälter in den Hohlraum einströmen und den durch die Konstruktion der Berstmembran bestimmten Mindestdruck übersteigen.

Die Berstmembran des erfindungsgemäßen Gasgenerators ist über dem gesamten Einsatzzeitraum des Gasgenerators betrachtet im wesentlichen den gleichen Umgebungsbedingungen ausgesetzt. Insbesondere wirkt sich der statische Druck des Flüssiggases, der oberhalb der kritischen Temperatur, bei der das gesamte Flüssiggas in die Gasphase übergegangen ist, und der bei mehr als 100 bar liegen kann, nicht auf die Berstmembran aus.

In vorteilhafter Weiterbildung der Erfindung ist vorgesehen, daß das Durchschlagelement ein dem Reaktionsbehälter zugewandtes als scharfkantige Schneide ausgebildetes Ende zum Durchschlagen der Reaktionsbehälterwand aufweist. Je scharfkantiger das Durchschlagelement an seinem die Wand des Reaktionsbehälters durchdringenden Ende ist, desto geringer müssen die pyrotechnisch aufgebauten Vortriebskräfte sein, um das Durchschlagelement durch die Reaktionsbehälterwand zu treiben. Damit können kleinformatigere und leichtgewichtigere Anzündelemente eingesetzt werden. Umgekehrt kann aber auch die Reaktionsbehälterwand stärker ausgebildet sein, um sowohl als Diffusionssperre als auch der Aufrechterhaltung der erforderlichen Druckstabilität zu dienen.

Gemäß einer weiteren vorteilhaften Ausgestaltung der Erfindung ist das Durchschlagelement nach Art einer Hülse ausgebildet, die gleitend verschiebbar im Hohlraum geführt ist. Die Hülse weist dabei ein dem Reaktionsbehälter zugewandtes axiales Ende mit einer scharfkantigen Schneide auf; an diesem axialen Ende weist die Hülse einen reduzierten Außendurchmesser mit lediglich geringer Wandstärke auf. Das zweite axiale Ende der Hülse weist demgegenüber einen vergrößerten Außendurchmesser und auch eine vergrößerte Wandstärke auf; an diesem Ende ist die Hülse im Hohlraum geführt. Die Ringfläche an dem dem Reaktionsbehälter abgewandten axialen Ende der Hülse ist so bemessen, daß die bei Zündung des Anzündelements im Hohlraum entstehenden dynamischen Drücke einen ausreichenden Kraftstoß zum Durchdringen der Reaktionsbehälterwand auf die Hülse ausüben.

Vorzugsweise verschließt das Durchschlagelement in derjenigen Position, in der es sich vor der Zündung des Anzündelementes befindet, die Einmündungsöffnung des Abströmraums in den Hohlraum und damit auch die Berstmembran.

Gemäß einer weiteren vorteilhaften Ausgestaltung der Erfindung ist der gasdichte Reaktionsbehälter eigen- und berstdruckstabil ausgeführt. Der Reaktionsbehälter selbst ist also widerstandsfähig gegenüber den bei der Verbrennung der Flüssiggase im Reaktionsbehälter auftretenden Innendrücke von bis zu 1000 bar. Der Reaktionsbehälter hält also sowohl den statischen Drücken (im Temperaturbereich von -35 °C bis +110 °C beträgt dieser Druck 10 bis 150 bar) als auch den dynamischen Drücken stand. Bei einem derartigen berstdruckstabilen Reaktionsbehälter ist der Beitrag, den das Gehäuse zur Druckstabilität beisteuert, von weitaus untergeordneter Bedeutung. Das Gehäuse hat lediglich Halte- und Positionierfunktion. Damit eröffnet sich die Möglichkeit, das Gehäuse den Bedürfnissen bezüglich Platzbedarf entsprechend auszugestalten. In diesem Zusammenhang ist es insbesondere vorteilhaft, das Gehäuse derart auszugestalten, daß es Teil des Modul-Behältnisses ist, in dem das Aufprallschutzkissen zusammengefaltet untergebracht ist und das mit dem zu schützenden Insassen zugewandten Verschlußdeckel versehen ist, der bei sich aufblasendem Aufprallschutzkissen öffnet. Durch die Integration des Gasgeneratorgehäuses in das Behältnis des Moduls kann dessen Bautiefe reduziert werden. Sofern das Gasgeneratorgehäuse Bestandteil des Moduls ist, ist für eine formschlüssige und funktionsdichte Ankopplung zum Behältnis des Moduls zu sorgen, es sie denn, daß das Gehäuse des Gasgenerators einstückig mit dem Behältnis des Moduls ist. Diese letzte Variante bringt jedoch Fertigungsprobleme, wenn man einmal berücksichtigt, daß das Behältnis des Moduls aus Kunststoff besteht, was der Normalfall ist. Insofern ist es günstiger, Behältnis und Gasgeneratorgehäuse getrennt herzustellen und über eine entsprechende Verbindung formschlüssig und funktionsdicht miteinander zu koppeln. Funktionsdicht besagt in diesem Zusammenhang, daß die aus dem Gasgeneratorgehäuse austretenden und in das Behältnis gelangenden Verbrennungsgase nicht über die Verbindungsstelle zwischen Gasgeneratorgehäuse und Behältnis austreten können und somit vollständig zum Aufblasen des Aufprallschutzkissens zur Verfügung stehen. Bei aufgeblasenem Aufprallschutzkissen herrschen im Modul lediglich Innendrücke von einigen wenigen bar.

Der erfindungsgemäße Flüssiggasgenerator kann auch derart ausgeführt sein, daß der Reaktionsbehälter lediglich die Funktion der Diffusionssperre zum Erreichen der Gasdichtigkeit bei Langzeitlagerung hat und daß dementsprechend die Druckfestigkeit von der umgebenden Gehäusestruktur aufgebracht wird. Der Reaktionsbehälter kann also recht dünnwandig ausgebildet sein, was den Vorteil hat, daß die Wand leicht von dem Durchschlagelement durchschlagen werden kann.

Ein weiterer Vorteil ist dadurch gegeben, daß unterschiedliche Materialien für Struktur (zur Festigkeit) und Reaktionsbehälter (zur Dichtigkeit) je nach Art des Flüssiggases und der Betriebsdrücke gewählt werden können.

Nachfolgend werden anhand der Figuren Ausführungsbeispiele der Erfindung näher erläutert. Im einzelnen zeigen:
- Fig. 1: eine Seitenansicht eines Moduls einer passiven Sicherheitseinrichtung mit aufblasbarem Aufprallschutzkissen, teilweise geschnitten,
- Fig. 2: einen Schnitt durch den Gasgenerator des Moduls von Fig. 1 entlang der Linie II-II der Fig. 1,
- Fig. 3: im vergrößerten Maßstab den in Fig. 2 strichpunktiert umrahmten Bereich des Gasgenerators und
- Fig. 4: eine alternative Ausführungsform eines Gasgenerators im Längsschnitt.

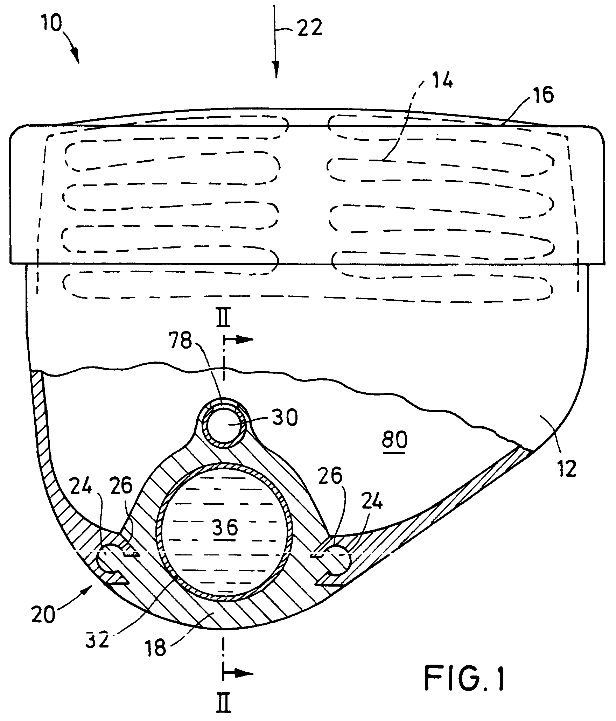

Das Einbaumodul 10 einer passiven Sicherheitseinrichtung zum Schutz von Kraftfahrzeug-Insassen gegen Aufprallverletzungen ist in Seitenansicht in Fig. 1 dargestellt. Das Modul 10 weist ein einseitig offenes Behältnis 12 aus Kunststoff auf, dessen offene Seite durch das Gewebematerial eines Aufprallschutzkissens 14 verschlossen ist. An dem Behältnis 12 ist ein Deckel 16 aus Kunststoff befestigt, der sich öffnet, wenn das Aufprallschutzkissen aufgeblasen wird. Integraler Bestandteil des Behältnisses 12 ist das Gehäuse 18 eines Flüssiggasgenerators 20. Das Behältnis 12 weist in der Draufsicht (in Richtung des Pfeils 22) eine rechteckige Form auf, wobei sich der Flüssiggasgenerator 20 über die gesamte Längserstreckung des Behältnisses 12 erstreckt. Das Gehäuse 18 des Flüssiggasgenerators 20, das aus Metall oder faserverstärktem Kunststoff bestehen kann, weist an zwei einander abgewandten Längsseiten längsverlaufende Wülste 24 auf. Die Wülste 24 liegen über mehr als 270° ihrer Umfangsfläche frei und sind im übrigen Bereich mit dem Gehäuse 18 verbunden. An den einander zugewandten und ans Gehäuse 18 angrenzenden Enden des Behältnisses 12 weist dieses jeweils eine Nut 26 auf. Die Nuten 26 weisen die zu den Wülsten 24 korrespondierenden Querschnitte auf. Zum Zusammenbau des Moduls werden die Wülste 24 des Gehäuses 18 in die offenen Nuten 26 eingeführt und das Gehäuse 18 auf diese Weise seitlich in das Behältnis 12 eingeschoben. Das Gehäuse 18 ist durch die Art seiner Verbindung formschlüssig und funktionsdicht mit dem Behältnis 12 verbunden.

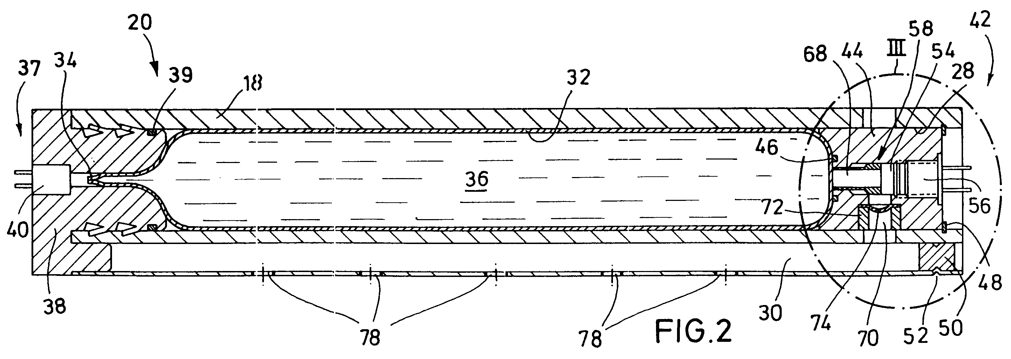

Nachfolgend wird im einzelnen auf den Aufbau und die Funktionsweise des Flüssiggasgenerators 20 eingegangen. Gemäß Fig. 2 ist das Gehäuse 18, bei dem es sich um ein Strangpreßprofil handeln kann, langgestreckt. Bei dem Gehäuse 18 handelt es sich um ein Hohlprofil mit einer ersten vergleichsweise großen Durchgangsöffnung 28 und einer zweiten vergleichsweise kleinen Durchgangsbohrung 30. Sowohl die Durchgangsöffnung 28 als auch die Durchgangsbohrung 30 verlaufen in axialer Richtung. In die Durchgangsöffnung 28 eingeführt ist ein kartuschenähnlicher Reaktionsbehälter 32 mit vergleichsweise geringer Wandstärke. Bei dem Reaktionsbehälter handelt es sich um einen Behälter, dessen offenes Ende bei 34 gasdicht verschlossen ist. In dem Reaktionsbehälter 32 befindet sich Flüssiggas 36. Die axiale Erstreckung des Reaktionsbehälters 32 ist geringer als diejenige des Gehäuses 18. An dem dem verschlossenen Ende 34 des Reaktionsbehälters 32 zugewandten Ende 37 des Gehäuses 18 ist dieses durch einen Stopfen 38 verschlossen. Der Stopfen 38 ist dem "Flaschenhals" des Reaktionsbehälters 32 an dessen verschlossenes Ende 34 angepaßt und in diesem Abschnitt mit der Innenwand der Durchgangsöffnung 28 verkrallt. Über einen Dichtungsring 39 ist der Stopfen 38 gegenüber dem Gehäuse 18 abgedichtet. Der Stopfen 38 trägt einen Gassensor 40, der aus dem verschlossenen Ende 34 des Reaktionsbehälters 32 gegebenenfalls austretendes Gas detektiert.

Neben der Durchgangsöffnung 28 verschließt der Stopfen 38 auch die Durchgangsbohrung (Abströmraum) 30 am Ende 37 des Gehäuses 18, wie dies in Fig. 2 gezeigt ist.

Auch das andere axiale Ende 42 des Gehäuses 18 ist durch einen im wesentlichen zylindrischen Stopfen 44 verschlossen. Auf seiner dem Reaktionsbehälter 32 zugewandten Innenseite ist der Stopfen 44 der Form des Reaktionsbehälters 32 angepaßt. Über einen Dichtungsring 46 ist der Stopfen 44 gegenüber dem Reaktionsbehälter 32 abgedichtet. Der Stopfen 44 ist in der Durchgangsöffnung 28 durch einen Federring 48 gesichert, der außen an dem Stopfen 44 anliegt und in eine Ringnut in der Innenseite der Durchgangsöffnung 28 teilweise hineinragt. Am Ende 42 des Gehäuses 18 ist dessen Durchgangsbohrung 30 durch einen separaten Stopfen 50 verschlossen, der durch eine Einschnürung 52 des Gehäuses 18 oder einen Spannstift in der Durchgangsbohrung 30 gegen axiale Verschiebungen gesichert gehalten ist.

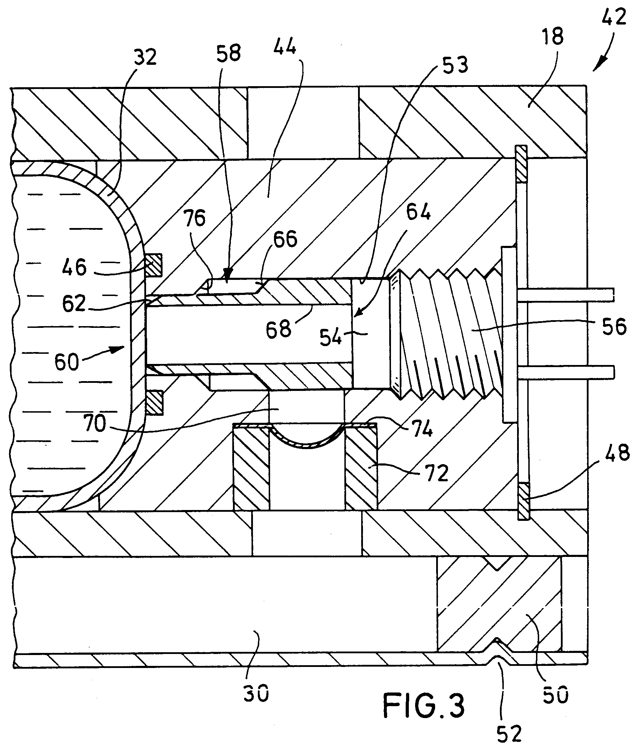

Der Aufbau des Stopfens 44 am Gehäuseende 42 wird nachfolgend anhand von Fig. 3 beschrieben. Der Stopfen 44 weist eine axiale Innenbohrung 53 auf, die einen Hohlraum 54 bildet. In dem Hohlraum 54 befindet sich ein elektrisch auslösbares pyrotechnisches Anzündelement 56, das in das dem Gehäuseende 42 zugewandte Ende der Bohrung 53 des Stopfens 44 eingeschraubt oder in einer anderen Weise fest verbunden ist. Die bis auf den Gewindeabschnitt glatte Bohrung 53 nimmt desweiteren ein hülsenartiges Durchschlagelement 58 auf, das axial verschiebbar in der Bohrung 53 geführt ist. Das Durchschlagelement 58 weist ein scharfkantiges, an dem Stirnende des Reaktionsbehälters 32 anliegendes Ende 60 auf. An diesem Ende 60 weist das Durchschlagelement 58 eine vergleichsweise geringe Wandstärke auf; das Durchschlagelement 58 ist an seinem Ende 60 durch einen Außenanschliff 62 nach Art einer Ringschneide ausgebildet. Das dem Anzündelement 56 zugewandte andere axiale Ende 64 weist einen gegenüber dem Ende 60 vergrößerten Außendurchmesser und eine größere Wandstärke auf. Im Bereich zwischen den beiden Enden 60 und 64 ist das hülsenartige Durchschlagelement 58 mit einer konischen Außenfläche 66 versehen. Aufgrund seiner Hülsengestalt weist das Durchschlagelement 58 eine zentrale Durchgangsbohrung 68 (Überströmkanal) auf. An seinem am Reaktionsbehälter 32 anliegenden Ende des Stopfens 44 ist dessen Bohrung 53 verjüngt. In diesem Abschnitt liegt die Bohrung 53 an dem Ende 60 des hülsenförmigen Durchschlagelements 58 an, dessen anderes Ende 64 in der Bohrung 53 in deren Bereich vergrößerten Durchmessers geführt ist.

Über eine radiale Bohrung 70 sind der Hohlraum 54 und die Durchgangsbohrung 30 miteinander verbunden. Die Durchgangsbohrung 70 besteht aus einem ersten Abschnitt, der im Stopfen 44 ausgebildet ist, und einem zweiten Abschnitt, der im Gehäuse 18 ausgebildet ist. Beide Abschnitte der Durchgangsbohrung 70 fluchten bei eingebautem und entsprechend ausgerichtetem Stopfen 44 miteinander. In dem im Stopfen 44 befindlichen Abschnitt der Durchgangsbohrung 70 ist ein hohlzylindrisches Einsatzstück 72 eingesetzt, das eine Berstmembran 74 trägt. Über die Berstmembran 74, die sich an einer Schulter des Stopfens 44 abstützt und zwischen dem zylindrischen Zwischenstück 72 und dem Stopfen 44 gehalten ist, ist der Hohlraum 54 gegenüber der Durchgangsbohrung 30 verschlossen.

Der Zusammenbau des Gasgenerators 20 gemäß Fig. 2 gestaltet sich wie folgt. Zunächst wird das Strangpreßprofil des Gehäuses 18 an einem seiner beiden Enden 37,42 durch den bzw. die entsprechenden Stopfen 38,44, 50 verschlossen. Alsdann wird die Reaktionsbehälter-Kartusche 32 in die Durchgangsöffnung 32 eingeschoben und das Gehäuse an seiner dann noch offenen Seite durch den bzw. die zugehörigen Stopfen verschlossen. Vorteilhaft hierbei ist der modulare Aufbau des Gehäuses 18 des Flüssiggasgenerators 20. Reaktionsbehälter 32, Zündmechanismus und Berstmembran liegen als getrennte Elemente vor, die in der oben beschriebenen und in den Figuren dargestellten Weise zusammengesetzt sind und zum Flüssiggasgenerator 20 zusammengebaut werden. Dabei ist noch zu beachten, daß das hohlzylindrische Zwischenstück 72 vor der Montage des Stopfens 44 in dessen Abschnitt der Durchgangsbohrung 70 zusammen mit der Berstmembran 74 eingeführt wird.

Nachfolgend soll kurz die Funktionsweise des Gasgenerators gemäß Fig. 2 erläutert werden. Zur Aktivierung des Flüssiggasgenerators 20 wird dessen Anzündelement 56 gezündet, was durch einen elektrischen Impuls als Antwort auf ein Ansprechen des Crash-Sensors erfolgt. Infolge der Zündung des elektrischen Anzündelements 56 entstehen im Hohlraum 54 Verbrennungsgase, deren dynamische Drücke ausreichen, um über die Ringstirnfläche des Endes 64 das Durchschlagelement 58 mit einer zum Durchschlagen des Reaktionsbehälters 32 ausreichenden Impuls vorzubewegen. Dabei stanzt sich das Durchschlagelement 58 aufgrund seines mit Außenanschliff 62 versehenen Endes 60 durch die Wand des Reaktionsbehältnisses 32. Das Durchschlagelement 58 wird soweit in den Reaktionsbehälter 32 hineingetrieben, bis die konische Außenfläche 66 an einer konischen Innenfläche 76 der Bohrung 53 des Stopfens 44 anliegt. Der Druck der Verbrennungsgase des Anzündelements 56 im Hohlraum 54 reicht nicht aus, um die Berstmembran 74 aufzubrechen. Bei in der Wand des Behälters 32 befindlichem Durchschlagelement 58 treten die Anzündschwaden des Anzündelements 56 in das Innere des Reaktionsbehälters 32 hinein, wo sie die Verbrennung des Flüssiggases 36 initiieren. Bei der Verbrennung des Flüssiggases 36 treten aus dem Reaktionsbehälter 32 über die Überströmöffnung 68 des Durchschlagelements 58 Verbrennungsgase in den Hohlraum 54 hinein. Sobald die Verbrennungsgase im Hohlraum 54 einen bestimmten Druck erreicht haben, bricht die Berstmembran 74 auf. Der Druck, bei dem die Berstmembran 74 aufbricht, ist durch die Konstruktion der Berstmembran 74 bestimmt. Nachdem die Berstmembran 74 aufgebrochen ist, besteht über die Durchgangsbohrung 70 eine Verbindung zwischen dem Hohlraum 54 und der Durchgangsbohrung 30, so daß die Verbrennungsgase in die Durchgangsbohrung 30 eintreten. Über radiale Öffnungen 78 in dem Gehäuse 18 verlassen die Verbrennungsgase die Durchgangsbohrung 30 und treten in den vom Modul-Behältnis 12 umschlossenen Raum 80 ein (s. Fig. 1). Durch entsprechende Wahl der Berstmembran und eine entsprechende Wahl des Querschnitts der Durchgangsbohrung 70 läßt sich die Aufblascharakteristik des Aufprallschutzkissens beeinflussen.

Die Verwendung der Berstmembran 74 wirkt sich darüber hinaus auch in gewisser Weise auf eine Vergleichmäßigung der Gaserzeugungsrate über den gesamten in Betracht zu ziehenden Betriebstemperaturbereich von -35 bis +85 °C aus. Wenn man einmal davon ausgeht, daß materialbedingt der Druck, bei dem die Berstmembran öffnet, umgekehrt proportional zur Betriebstemperatur ist und die Verbrennung des Flüssiggases umso schneller erfolgt, je höher die Betriebstemperatur ist, dann wird deutlich, daß sich diese beiden Abhängigkeiten über den gesamten Betriebstemperaturbereich kompensieren, und zwar dahingehend, daß eine Vergleichmäßigung der Gaserzeugungsrate, mit der der Flüssiggasgenerator 20 das Gas zum Aufblasen des Aufprallschutzkissens erzeugt, erzielt wird.

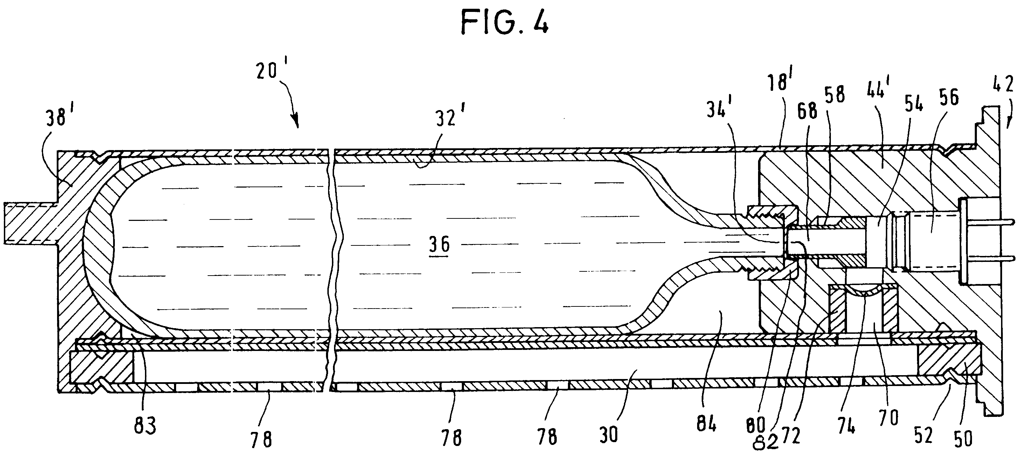

Ein zweites Ausführungsbeispiel eines Gasgenerators 20' ist in Fig. 4 im Längsschnitt dargestellt, soweit die Bestandteile des Gasgenerators 20' denjenigen des Gasgenerators 20 der Fign. 2 und 3 gleichen, sind sie in Fig. 4 mit den gleichen Bezugszeichen versehen. Im Unterschied zum Gasgenerator 20 gemäß Fign. 2 und 3 weist bei dem Gasgenerator 20' der Fig. 4 der Flaschenhals des Reaktionsbehälters 32' zum Stopfen 44', in dessen Hohlraum 54 das Durchschlagelement 58 angeordnet ist. Der sowohl eigendruckstabil als auch berstdruckstabil ausgeführte Reaktionsbehälter 32' ist an seinem offenen Ende 34' (Flaschenhals) durch eine Verschlußkappe 80 gasdicht verschlossen. Diese Verschlußkappe 80 ist dem Durchschlagelement 58 ausgesetzt und wird von diesem durchschlagen. Die Verschlußkappe 80 weist eine zentrale Vertiefung 82 auf, die den Hohlraum 54 an dessen den Reaktionsbehälter 32' zugewandten Ende fortsetzt. Die Dicke der Verschlußklappe 80 im Bereich der dem scharfkantigen Ende 60 des Durchschlagelements 58 gegenüberliegenden Vertiefung 82 ist so groß gewählt, daß die Verschlußkappe 80 den statischen Innendrücken (je nach Temperatur bis zu ca. 150 bar) standhält, also der Reaktionsbehälter 32' auch im Bereich seiner Verschlußkappe 80 eigenformstabil ist. Die reduzierte Wandstärke der Verschlußkappe 80 im Bereich ihrer Vertiefung 82 erleichtert ein Durchschlagen durch das Durchschlagelement 58. Im übrigen ist die Wandstärke des Reaktionsbehälters 32' so groß gewählt, daß er auch den dynamischen Drücken bei der Verbrennung des Flüssiggases 36 standhält, also berststabil ist. Deshalb brauchen auch die Stopfen 38' und 44' am Boden und Flaschenhals des Reaktionsbehälters 32' nicht formschlüssig am Reaktionsbehälter 32' anliegen, sondern es verbleiben Hohlräume 83 und 84.

## Patentansprüche

1. Flüssiggasgenerator für ein aufblasbares Aufprallschutzkissen zum Schutz eines Kraftfahrzeug-Insassen vor Verletzungen, mit
- einem Gehäuse (18),
- einem in dem Gehäuse (18) angeordneten geschlossenen Reaktionsbehälter (32) zur Aufnahme von Flüssiggas (36),
- einem an den Reaktionsbehälter (32) angrenzenden Hohlraum (54) im Gehäuse (18),
- einem Anzündelement (56),
- einem in dem Hohlraum (54) verschiebbar angeordneten Durchschlagelement (58) zum Durchschlagen der Wand des Reaktionsbehälters (32) bei Initiierung des Anzündelements (56), wobei die Verbrennungsgase des Flüssiggases (36) aus dem Reaktionsbehälter (32) heraus durch einen Überströmkanal (68) im Durchschlagelement (58) in den Hohlraum (54) gelangen,
- einem in den Hohlraum (54) einmündenden Abströmraum (30) zum Abführen der bei der Verbrennung des Flüssiggases (36) entstehenden Verbrennungsgase aus dem Gehäuse (18) heraus und
- einer Berstmembran (74), die den Abströmraum (30) gegenüber dem Hohlraum (54) verschließt und bei Erreichen eines Mindestdruckes der in dem Hohlraum (54) befindlichen Verbrennungsgase aufbricht.

2. Flüssiggasgenerator nach Anspruch 1, dadurch gekennzeichnet, daß das Durchschlagelement (58) ein dem Reaktionsbehälter (32) zugewandtes scharfkantiges Schneidende (60) zum Durchschlagen der Wand des Reaktionsbehälters (32) aufweist.

3. Flüssiggasgenerator nach Anspruch 1 oder 2, dadurch gekennzeichnet, daß das Durchschlagelement (58) nach Art einer Hülse ausgebildet ist, deren axiales dem Reaktionsbehälter (32) zugewandtes Ende (60) mit einer Schneide versehen ist und deren anderes axiales Ende (64) einen vergrößerten Außendurchmesser und eine vergrößerte Wandstärke aufweist, und daß die Hülse in dem Hohlraum (54) gleitend verschiebbar geführt ist.

4. Flüssiggasgenerator nach einem der Ansprüche 1 bis 3, dadurch gekennzeichnet, daß das Durchschlagelement (58) in seiner an der Reaktionsbehälterwand anliegenden Position die Einmündungsöffnung des Abströmraums (Durchgangsbohrung 30) in den Hohlraum (54) verschließt.

5. Flüssiggasgenerator nach einem der Ansprüche 1 bis 4, dadurch gekennzeichnet, daß der Reaktionsbehälter (32) dünnwandig ausgebildet ist und von dem Gehäuse (18) umschlossen ist, wobei das Gehäuse (18) ausreichend druckstabil ausgeführt ist.

6. Flüssiggasgenerator nach einem der Ansprüche 1 bis 4, dadurch gekennzeichnet, daß der Reaktionsbehälter (32) eigen und berstdruckstabil ausgeführt ist.

7. Flüssiggasgenerator nach einem der Ansprüche 1 bis 6, dadurch gekennzeichnet, daß das Gehäuse (18) mit einer Ankopplung (24,26) zum Verbinden mit einem mit dem Aufprallschutzkissen (14) versehenen Behältnis (12) versehen ist, wobei die Ankopplung (24,26) und das Behältnis (12) derart ausgebildet sind, daß das Gehäuse (18) formschlüssig und funktionsdicht mit dem Behältnis (12) koppelbar ist.

## Claims

1. Liquified-gas generator for an inflatable impact protection cushion for protecting a motor-vehicle occupant against injury, having
- a casing (18),
- a closed reaction container arranged within the casing (18) for receiving liquified gas (36),
- a hollow space (54) in the casing (18), said hollow space adjoining the reaction container (32),
- an ignition element (56),
- a puncture element (58) arranged to be capable of being displaced in the hollow space (54) for penetrating the wall of the reaction container (32) in the event of initiation of the ignition element (56), whereby the combustion gases of the liquified gas (36) pass out of the reaction container (32) through an overflow channel (68) in the puncture element (58) into the hollow space (54),
- a discharge space (30) opening into the hollow space (54) for carrying the combustion gases arising in the course of combustion of the liquified gas (36) out of the casing (18) and
- a bursting membrane (74), which seals the discharge space (30) in relation to the hollow space (54) and which bursts open when a minimum pressure of the combustion gases in the hollow space (54) is reached.

2. Liquified-gas generator according to Claim 1, characterised in that the puncture element (58) has a sharp-edged cutting end (60) facing the reaction container (32) for the purpose of penetrating the wall of the reaction container (32).

3. Liquified-gas generator according to Claim 1 or 2, characterised in that the puncture element (58) is designed in the manner of a sheath, the axial end (60) of which facing the reaction container (32) is provided with a cutting edge, and the other axial end (64) of which has an enlarged outer diameter and an enlarged wall thickness, and that the sheath is guided so as to be capable of being displaced by sliding in the hollow space (54).

4. Liquified-gas generator according to one of Claims 1 to 3, characterised in that the puncture element (58) in its position adjacent to the wall of the reaction container closes off the discharge opening of the discharge space (through-passage 30) which opens into the hollow space (54).

5. Liquified-gas generator according to one of Claims 1 to 4, characterised in that the reaction container (32) is designed to be thin-walled and is surrounded by the casing (18), with the casing (18) being constructed so as to be sufficiently stable under pressure.

6. Liquified-gas generator according to one of Claims 1 to 4, characterised in that the reaction container (32) is constructed so as to be stable under its own pressure and under bursting pressure.

7. Liquified-gas generator according to one of Claims 1 to 6, characterised in that the casing (18) is provided with a coupling (24,26) for the purpose of connecting with a case (12) which is provided with the impact protection cushion (14), with the coupling (24,26) and the case (12) being designed in such a way that the casing (18) is capable of being coupled with the case (12) in positive and functionally tight manner.

## Revendications

1. Générateur à gaz liquide pour un coussin gonflable pour éviter les blessures aux passagers d'un véhicule en cas de collision destiné, comportant
- un boîtier (18),
- un récipient de réaction (32) fermé disposé dans le boîtier (18) et destiné à recevoir du gaz liquide (36),
- une cavité (54) dans le boîtier (18), contiguë au récipient de réaction (32),
- un moyen (56) d'allumage,
- un élément perforateur (58) monté coulissant dans la cavité (54), pour perforer la paroi du récipient de réaction (32), lors du déclenchement du moyen d'allumage (56), les gaz résultant de la combustion du gaz liquide (36) parvenant du récipient de réaction (32) dans la cavité (54) à travers un canal d'écoulement (68) dans l'élément perforateur (58),
- une chambre de sortie (30) débouchant dans la cavité (54), pour évacuer hors du boîtier (18) les gaz de combustion générés par la combustion du gaz liquide (36) et
- une membrane de rupture (74) qui ferme la chambre de sortie (30) vis-à-vis de la cavité et qui se rompt lorsque les gaz de combustion présents dans la cavité (54) atteignent une pression minimale.

2. Générateur à gaz liquide selon la revendication 1, caractérisé par le fait que l'élément perforateur (58) présente une extrémité coupante (60) acérée, côté récipient de réaction (32), pour perforer la paroi dudit récipient de réaction (32).

3. Générateur à gaz liquide selon la revendication 1 ou 2, caractérisé par le fait que l'élément perforateur (58) se présente sous la forme d'une sorte de manchon, dont l'extrémité (60) axiale tournée vers le récipient de réaction (32) est pourvue d'une arête coupante et dont l'autre extrémité (64) axiale présente un diamètre extérieur plus grand, et par le fait que le manchon est guidé coulissant dans la cavité (54).

4. Générateur à gaz liquide selon l'une des revendications 1 à 3, caractérisé par le fait que l'élément perforateur (58), dans sa position en contact avec la paroi du récipient de réaction, ferme l'embouchure de la chambre de sortie (orifice 30) dans la cavité (54).

5. Générateur à gaz liquide selon l'une des revendications 1 à 4, caractérisé par le fait que le récipient de réaction (32) a une paroi mince et est entouré par le boîtier (18), le boîtier (18) présentant une résistance à la pression suffisante.

6. Générateur à gaz liquide selon l'une des revendications 1 à 4, caractérisé par le fait que le récipient de réaction (32) est indépendant et est résistant à la pression d'éclatement.

7. Générateur à gaz liquide selon l'une des revendications 1 à 6, caractérisé par le fait que le boîtier (18) est pourvu d'un moyen de couplage (24, 26) à des fins de liaison avec un conteneur (12) pourvu du coussin gonflable (14) de protection, le moyen de couplage (24, 26) étant agencé de telle sorte que le boîtier (18) puisse être couplé par obstacle et de manière étanche au conteneur (12).
